# EUROPÄISCHE PATENTSCHRIFT

(11) **EP 1 921 123 B1**
(45) Veröffentlichungstag und Bekanntmachung des Hinweises auf die Patenterteilung: **27.06.2012**
(21) Anmeldenummer: 07020376.5
(22) Anmeldetag: 18.10.2007
(51) Int. Cl.: C09K 5/04, F25B 49/00

(54) **Kälteanlage mit CO2 als Kältemittel**
Cooling device with CO2 as coolant
Installation de refroidissement dotée de CO2 comme réfrigérant

(30) Priorität: 11.11.2006 DE 102006053231
(43) Veröffentlichungstag der Anmeldung: 14.05.2008
(73) Patentinhaber: GM Global Technology Operations LLC, Detroit, MI 48265-3000 (US)
(72) Erfinder: Matthes, Markus, Dr., 50739 Köln (DE)
(74) Vertreter: Daniel, Ulrich W.P.

(56) Entgegenhaltungen:
- EP-A- 0 872 693
- EP-A- 1 013 738
- WO-A-2005/049759
- DE-A1- 4 223 497
- DE-A1- 4 308 453
- DE-A1-102004 019 929
- JP-A- 5 312 370
- JP-A- 10 311 644
- JP-A- 2003 329 339
- JP-A- 2006 022 984
- SAWALHA S ET AL: "SAFETY ANALYSIS OF CO2 AS A REFRIGERANT IN SUPERMARKET REFRIGERATION" IIR GUSTAV LORENTZEN CONFERENCE ON NATURAL WORKING FLUIDS. JOINT CONFERENCE OF THE INTERNATIONAL INSTITUTE OF REFRIGERATION SECTION B AND E, 17. September 2002 (2002-09-17), Seiten 192-199, XP001176584

## Beschreibung

Die Erfindung betrifft Kälteanlagen mit C0₂ als Kältemittel.

Kälteanlagen, beispielsweise in der Ausbildung als Klimaanlagen, basieren auf einen Kältemittelkreislauf, bei dem ein Kältemittel abwechselnd expandiert und komprimiert wird. Bekannte Kältemittel sind unter anderem organische Verbindungen wie FCKWs oder FKWs, die aber freigesetzt die Ozonschicht der Erdatmosphäre schädigen oder als Treibhausgase wirken können.

Auf der Suche nach einem umweltfreundlicheren Kältemittel ist verschiedentlich CO₂ (Kohlendioxid) vorgeschlagen worden. CO₂ ist allerdings in erhöhten Konzentrationen gesundheitsgefährdend und kann einen apholytischen Schock auslösen. Insofern müssen beim Einsatz von CO₂ als Kältemittel gewisse Sicherheitsvorkehrungen getroffen werden. Aus diesem Grund ist beispielsweise (Dr. Robert Mager: Safety concept for a R744 AC system, KDA Wintermeeting Saalfelden, 2006) für den Einsatz von CO₂ in Kfz-Klimaanlagen vorgeschlagen worden, dem CO₂ Duftstoffe zuzuführen, damit Fahrzeuginsassen ein eventuelles CO₂-Leck sofort wahrnehmen können.

Aus der EP 1 013 738 A1 ist ein Kühlkreislauf bekannt, welcher Kohlendioxid als Kältemittel verwendet, wobei dem Kohlendioxid ein Duftstoff zugesetzt ist. Unter einer Vielzahl hierfür infrage kommender Duftstoffe ist unter anderem auch Ammoniak vorgesehen.

Die WO 2005/049759 A1) beschreibt weiterhin eine detektierbare Kältemittelzusammensetzung, welche detektierbare Indikatoren zur Leckerkennung aufweist. Neben einer Reihe von möglichen Kältemitteln wie etwa Fluorchlorkohlenwasserstoff, Kohlenwasserstoff, Kohlendioxid, Ammoniak sowie Dimethylethan ist auch eine Reihe von Indikatoren, etwa C₁₋₅ Fluorkohlenwasserstoff, C₁₋₂ Fluorchlorkohlenwasserstoff, C₁₋₄ Chlorkohlenwasserstoff sowie zahlreiche weitere Kohlenwasserstoffverbindungen neben Schwefeldioxid, Stickstoffdioxid, Ethanolamin sowie Ammoniak vorgeschlagen.

Es ist eine Aufgabe einer Ausführungsform der Erfindung, eine Kälteanlage bereitzustellen, die mit dem Kältemittel Kohlendioxid sicher betrieben werden kann.

Die Lösung dieser Aufgabe erfolgt mit den Merkmalen der unabhängigen Ansprüche. Vorteilhafte Weiterbildungen und weitere Ausführungsformen ergeben sich mit den Merkmalen der abhängigen Ansprüche.

Ein erster Aspekt der Erfindung betrifft eine als Klimaanlage ausgebildete Kälteanlage für ein Transportmittel. Das Transportmittel kann ein Kraftfahrzeug, beispielsweise ein Pkw, ein Flugzeug oder ein Zug sein, bei dem die Klimaanlage die Raumtemperatur, die Luftfeuchtigkeit etc. regelt. Eine erste Ausführungsform derselben enthält Kohlendioxid als Kältemittel, wobei dem Kohlendioxid Ammoniak als Duftstoff zugemischt ist.

Des Weiteren umfasst die Kälteanlage einen Luftgütesensor, der ausgebildet ist, Ammoniak zu detektieren. Derartige Luftgütesensoren sind allgemein bekannt und besitzen die allseits geschätzten Komfortmerkmale, sodass auf den Komfort bekannter Kälteanlagen, z.B. Klimaanlagen, nicht verzichtet werden muss, wie es bei CO₂-Sensoren heutzutage noch der Fall sein sollte.

Dem Kältemittel CO₂ ist Ammoniak als Duftstoff beigemischt, also in derart geringen Konzentrationen bzw. Mengen, dass es gerade noch zuverlässig durch seinen Geruch wahrgenommen werden kann. Zwar ist Ammoniak ein aus dem Stand der Technik bekanntes Kältemittel, in der vorgeschlagenen Mischung von CO₂ und Ammoniak spielt es jedoch wegen seiner Beimischung in derart geringen Mengen als Kältemittel gar keine Rolle. Vielmehr dient Ammoniak ausschließlich der olfatischen Wahrnehmung von eventuell austretendem CO₂ in der unmittelbaren Umgebung der Kälteanlage.

Die Beimischung von Ammoniak als Duftstoff liefert ein Kältemittel CO₂ + Ammoniak, das bei einem Leck der Kälteanlage wegen seines charakteristischen Geruchs die Lecksuche erleichtert, wobei das Leck durch im Bereich der Klimatechnik erprobte Lecksuchgeräte detektiert werden kann. Auch zuverlässige und preiswerte Luftgütesensoren, die Ammoniak erkennen können, sind bereits vorhanden und erprobt. Es können also teure CO₂-Sensoren vermieden werden.

Ammoniak hat weiterhin einen charakteristischen Geruch und wird dadurch von vielen Personen mit Kältetechnik in Verbindung gebracht, was die Akzeptanz im Einsatz erhöht. Auch Personen mit eingeschränktem Geruchssinn können meist noch Ammoniak riechen. Hierbei ist zu beachten, dass Ammoniak leichter als Luft und CO₂ schwerer als Luft ist. Dadurch wird Ammoniak früher geruchlich wahrgenommen als die CO₂-Konzentration in der eingeatmeten Luft steigt. Dies gewährleistet eine frühzeitige Warnung vor CO₂ durch Riechen von Ammoniak.

Ammoniak hat eine niedrige Geruchsschwelle von ca. 5 Vol. ppm, sodass ein großer Sicherheitspuffer zu Erträglichkeitsgrenze von ca. 500 - 1000 Vol. ppm gegeben ist. Dadurch können mit niedriger Beimischungskonzentration Konzentrationsgrenzen im Bereich der in Deutschland geltenden maximalen Arbeitsplatz-Konzentration (MAK) von 50 Vol. ppm eingehalten werden.

Wenn in der Kälteanlage eingesetzt, zeigt Ammoniak seine dort bekannten Eigenschaften, was seine Akzeptanz als Duftstoff unter Sicherheitsgesichtspunkten heraus erhöht. Gleichzeitig ist es kälteanlagentechnisch erprobt, sodass seine Handhabung leicht fällt. Hierbei bewährt sich Ammoniak unter anderem wegen seiner hohen Temperaturbeständigkeit und seiner guten Mischbarkeit mit CO₂ und dem Kältemittelöl.

Kälteanlagen, deren CO₂ Ammoniak beigemischt ist, können baulich einfacher gestaltet sein als ohne diesen Duftstoff, da ihre Verdampfer eine einfache Wandung haben können. Ohne den Duftstoff Ammoniak wären sonst aus Sicherheitsgründen doppelt ausgeführte Wandungen des Verdampfers erforderlich.

In einer zweiten Ausführungsform enthält das Kohlendioxid weniger als 0.05 Volumenprozent Ammoniak. Dies unterstreicht nochmals, dass Ammoniak nicht als zweites Kältemittel zugegeben wird, sondern als Duftstoff. Die Zugabe von mehr Ammoniak sollte für seine Funktion als Duftstoff keinen Sinn machen. Die geringen Mengen verteuern Kohlendioxid auch nicht.

Insbesondere, wenn bei den vorgeschlagenen Transportmitteln eine direkte Frischluftzufuhr nicht möglich ist, wie beispielsweise bei Flugzeugen oder modernen Zügen, gewährleistet die frühzeitige Detektion von Ammoniak ein ausreichendes Zeitfenster zum Ergreifen von Gegenmaßnahmen zwecks Vermeidung einer gesundheitsgefährdenden Erhöhung der CO₂-Konzentration.

In einer weiteren Ausführungsform umfasst die Kälteanlage, z.B. ausgebildet als Klimaanlage, einen Mikroprozessor. Der Mikroprozessor, beim Kfz z. B. der Bordcomputer, ist ausgebildet, für den Fall, dass ein Luftgütesensor eine Ammoniakkonzentration misst, die oberhalb eines vorgegebenen Schwellwerts liegt, eine Sicherheitsmaßnahme zu ergreifen. Bei der Sicherheitsmaßnahme handelt es sich um eine Maßnahme zum Schutz von Personen vor einer erhöhten Kohlendioxidkonzentration. Die Sicherheitsmaßnahme kann in der Ausgabe eines Warnsignals bestehen, zum Beispiel eines optischen oder akustischen Warnsignals. Bei einem Kfz kann die Sicherheitsmaßnahme im Betätigen der kombinierten Frischluft-/Umluftklappe der Klimaanlage hin zur Stellung "Frischluft" oder auch im Öffnen eines Fensters bestehen, das durch Senden eines Signals vom Mikroprozessor an den elektrischen Fensterhebermotor veranlasst wird.

Ein zweiter Aspekt der Erfindung betrifft ein Transportmittel, zum Beispiel ein Transportmittel für die Beförderung von Personen wie u. a. ein Kraftfahrzeug, ein Zug oder ein Flugzeug, mit einer Kälteanlage nach einer oder mehreren der oben beschrieben Ausführungsformen. Die Kälteanlage kann die Klimaanlage oder auch ein darin eingebauter Kühlschrank sein.

Ein dritter Aspekt der Erfindung betrifft Kohlendioxid, das Ammoniak als Duftstoff enthält, sowie die Verwendung von Ammoniak als Duftstoff in Kohlendioxid, insbesondere im Kältemittel Kohlendioxid. Der Ammoniakanteil kann hierbei weniger als 0.05 Volumenprozent betragen.

Weitere Merkmale und Vorteile der beanspruchten Erfindung werden aus der folgenden detaillierten Beschreibung mit Bezug auf die beigefügten Zeichnung erkennbar, die nachfolgend als nicht beschränkendes Beispiel angegeben ist. Hierbei soll die Benutzung von Bezugszeichen in der Figur nicht dahingehend verstanden werden, dass die Bezugszeichen den Schutzumfang der beanspruchten Erfindung einschränken sollen.

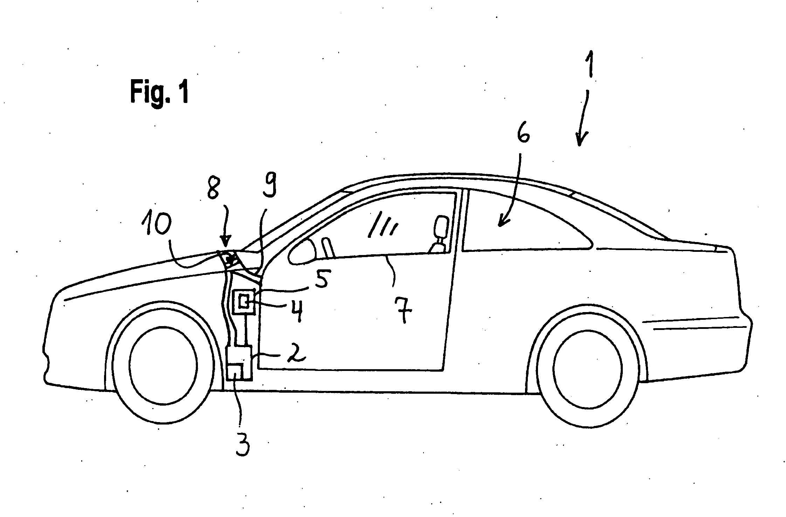

Die einzige Figur 1 zeigt ein Kraftfahrzeug 1 mit einer als Klimaanlage ausgebildeten Kälteanlage 2. Die Klimaanlage arbeitet mit dem Kältemittel Kohlendioxid, dem 0.004 Vol% Ammoniak beigemischt ist. Der Konzentrationswert des Ammoniaks orientiert sich am MAK-Wert des Ammoniaks, der als Schwelle zur Warnung vor 4 Vol% CO₂ in der Luft im Fahrzeuginnenraum genommen wird.

Der Kälteanlage 2 ist ein Luftgütesensor 3 zugeordnet. Er ist ausgebildet, Ammoniak zu detektieren, und liefert Messwerte an den Mikroprozessor 4 des Bordcomputers 5. Überschreitet der Messwert einen vorgegebenen ersten Schwellwert, so wird eine erste Sicherheitsmaßnahme ergriffen. Diese besteht in einer optischen und akustischen Warnanzeige. Ferner wird die Umluft-/Frischluftklappe der Klimaanlage, sofern vorhanden, in die Stellung "Frischluft" gebracht. Beim Überschreiten eines zweiten Schwellwerts, z.B. 4 Vol.% CO₂ in der Raumluft des Fahrzeuginnenraums 6, wird das Fenster 7 geöffnet.

Obwohl vorstehend eine konkrete Ausführungsform beschrieben wurden, wird der Fachmann erkennen, dass die Beschreibung dieser Ausführungsform nicht zum Zweck hat, die Erfindung in der angegebenen Form zu beschränken. Die Erfindung soll vielmehr alle Modifikationen, Äquivalente und Alternativen umfassen, die in den Schutzumfang der beanspruchten Erfindung fallen.

### Bezugszeichenliste

- 01: Kraftfahrzeug
- 02: Kälteanlage
- 03: Luftgütesensor
- 04: Mikroprozessor
- 05: Bordcomputer
- 06: Fahrzeuginnenraum
- 07: Fenster
- 08: Frischlufteinlass
- 09: Umlufteinlass
- 10: Frischluft-/Umluftklappe

## Patentansprüche

1. Klimaanlage (2) für ein Transportmittel, enthaltend Kohlendioxid als Kältemittel, wobei dem Kohlendioxid Ammoniak als Duftstoff zugemischt ist, **dadurch gekennzeichnet, dass** die Anlage einen Luftgütesensor (3) umfasst, der ausgebildet ist, Ammoniak zu detektieren.

2. Klimaanlage nach Anspruch 1, bei der das Kohlendioxid weniger als 0.05 Volumenprozent Ammoniak enthält.

3. Klimaanlage nach einem der vorherigen Ansprüche, bei der das Transportmittel ein Kraftfahrzeug (1), ein Flugzeug oder ein Zug ist.

4. Klimaanlage nach einem der vorhergehenden Ansprüche, der ein Mikroprozessor (4) zugeordnet und dieser ausgebildet ist, für den Fall, dass ein Luftgütesensor eine Ammoniakkonzentration misst, die oberhalb eines vorgegebenen Schwellwerts liegt, eine Sicherheitsmaßnahme zu ergreifen.

5. Transportmittel, insbesondere Kraftfahrzeug, umfassend eine Klimaanlage nach einem der vorherigen Ansprüche.

## Claims

1. An air-conditioning system (2) for a means of transport, containing carbon dioxide as a refrigerating agent, with ammonia being admixed to the carbon dioxide as an odorant, **characterized in that** the unit comprises an air-quality sensor (3) which is arranged to detect ammonia.

2. An air-conditioning system according to claim 1, wherein the carbon dioxide contains less than 0.05 percent by volume of ammonia.

3. An air-conditioning system according to one of the preceding claims, wherein the means of transport is a motor vehicle (1), an airplane or a train.

4. An air-conditioning system according to one of the preceding claims, which is associated with a microprocessor (4), and said microprocessor (4) is arranged to initiate a safety measure in the event that an air-quality sensor measures an ammonia concentration which lies above a predetermined threshold value.

5. A means of transport, especially a motor vehicle, comprising an air-conditioning system according to one of the preceding claims.

## Revendications

1. Installation de climatisation (2) pour un moyen de transport, contenant comme réfrigérant du dioxyde de carbone, lequel dioxyde de carbone est mélangé à de l'ammoniac servant d'additif odorant, **caractérisée en ce que** l'installation comprend un capteur de qualité de l'air (3) conçu pour détecter l'ammoniac.

2. Installation de climatisation selon la revendication 1, dans laquelle le dioxyde de carbone est additionné de moins de 0,05 % en volume d'ammoniac.

3. Installation de climatisation selon l'une des revendications précédentes, dans laquelle le moyen de transport est un véhicule à moteur (1), un avion ou un train.

4. Installation de climatisation selon l'une des revendications précédentes, qui est associée à un microprocesseur (4) conçu pour prendre une mesure de sécurité dans le cas où un capteur de qualité de l'air mesure une concentration d'ammoniaque supérieure à un seuil prédéterminé.

5. Moyen de transport, en particulier véhicule à moteur, comprenant une installation de climatisation selon l'une des revendications précédentes.
